(19) Europäisches Patentamt / European Patent Office / Office européen des brevets

(11) **EP 3 393 829 B1**

(12) **EUROPEAN PATENT SPECIFICATION**

(45) Date of publication and mention
of the grant of the patent:
**02.06.2021 Bulletin 2021/22**

(21) Application number: **15821002.1**

(22) Date of filing: **21.12.2015**

(51) Int Cl.:
**B60C 15/04** $^{(2006.01)}$

(86) International application number:
**PCT/US2015/067060**

(87) International publication number:
**WO 2017/111898 (29.06.2017 Gazette 2017/26)**

(54) **CARBON FIBER COMPOSITE FOR TIRE BEAD CORE**

KOHLENSTOFFFASERVERBUNDSTOFF FÜR REIFENWULSTKERN

COMPOSITE EN FIBRES DE CARBONE POUR ÂME DE TALON DE PNEU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**31.10.2018 Bulletin 2018/44**

(73) Proprietor: **Compagnie Générale des
Etablissements Michelin
63000 Clermont-Ferrand (FR)**

(72) Inventor: **BUCHER, Laurent
Greenville, South Carolina 29605 (US)**

(74) Representative: **Casalonga
Casalonga & Partners
Bayerstraße 71/73
80335 München (DE)**

(56) References cited:
**WO-A1-2006/128494      KR-B1- 100 270 565
US-A1- 2014 261 953**

## Description

### FIELD OF THE INVENTION

The subject matter of the present disclosure relates generally to a bead core for a tire. In particular, the present invention relates to a tire according to the preamble of claim 1, such as it is e.g. known from WO2006/128494A1.

### BACKGROUND OF THE INVENTION

A common tire construction includes a crown surmounted by a tread and connected to opposing sidewalls that extend from opposing bead portions. The bead portions are configured for mounting onto a wheel rim having an opposing pair of seats for receipt of the bead portions. Each bead portion typically includes at least one bead core.

The bead core is commonly constructed as a ring or hoop contained within rubber materials forming the bead portion. The bead core provides an anchor for the tire carcass ply or body ply, which extends between the bead cores and passes through the sidewalls and crown portion. For a pneumatic tire, the body ply helps constrain the shape of the tire upon inflation.

The bead core has conventionally been constructed from steel. For example, one or more steel wires may form cables that are wrapped into the shape of the hoop or ring. The number of wires or cables can depend upon e.g., the intended tire size. Different cross-sectional shapes for the bead core may be used.

Unfortunately, the steel used for such constructions has a density of e.g., about 7.8 grams per cubic centimeter. As such, collectively the pair of bead cores adds a significant amount to the overall weight of the tire. Increased weight typically means increased inertia and, therefore, an undesirable reduction in fuel economy. Reducing the weight of the bead portions is, therefore, desirable.

With respect to strength and stiffness, carbon fiber composites can provide comparable mechanical properties to steel. More desirably, carbon fiber composites can have a much lower density including e.g., as low as 1.6 grams per cubic centimeter. As such, the ability to successfully substitute carbon fiber composites for steel in the construction of the bead cores would result in significant weight reduction.

The use of carbon fiber composites for bead core construction presents various challenges. With certain exceptions, carbon fiber composites typically exhibit minimal strain at break. More particularly, carbon fiber composites show less strain at break than is typically associated with e.g., steel. In generally, materials that show plasticity or strain before break can be preferable to materials that do not - depending upon the particular application.

Accordingly, a tire bead core constructed from one or more carbon fiber composites would be useful and beneficial.

### SUMMARY OF THE INVENTION

The present invention provides a tire, according to claim 1. A tire incorporating such a bead core within the bead portions of the tire can experience substantial savings in weight. Additional objects and advantages of the invention will be set forth in part in the following description, or may be apparent from the description, or may be learned through practice of the invention.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:

> FIG. 1 illustrates a perspective view of an exemplary embodiment of a tire of the present invention.
> FIG. 2 is a schematic perspective view of a portion of an exemplary pultrusion process as maybe used in the present invention.
> FIG. 3 illustrates a side view of a portion of an exemplary process as may be used in creating an exemplary tire of the present invention.
> FIG. 4 illustrates a side view of a portion of another exemplary process as may be used in creating an exemplary tire of the present invention.
> FIG. 5 illustrates a side view of a portion of another exemplary process as may be used in creating an exemplary tire of the present invention.
> FIG. 6 is a schematic view of a curved composite as will be further described.

The use of the same or similar reference numbers in the figures denotes the same or similar features unless otherwise indicated.

### DETAILED DESCRIPTION

For purposes of describing the invention, reference now will be made in detail to embodiments of the invention, one or more examples of which are illustrated in the drawings. Each example is provided by way of explanation of the invention, not limitation of the invention.

"Axial direction" or the letter "A" in the figures refers to a direction parallel to the axis of rotation of e.g., a tire as it travels along a road surface.

"Radial direction" or the letter "R" in the figures refers to a direction that is orthogonal to axial direction A and extends in the same direction as any radius that extends orthogonally from axial direction A.

"Circumferential direction" or the letter C is orthogonal to both radial direction R and axial direction A at any given point about the circumference of the tire and is defined by the direction of rotation of the tire about its axis of rotation.

"Equatorial plane" or EP means a plane that passes perpendicular to the axis of rotation and bisects the tire into substantial equal and opposing halves.

"Meridian plane" means a plane that includes the axis of rotation and intersects the tire.

"Carbon fiber" is a term that will readily understood by one of ordinary skill in the art and includes strands of carbon that may be twisted together to e.g., create yarn or rovings.

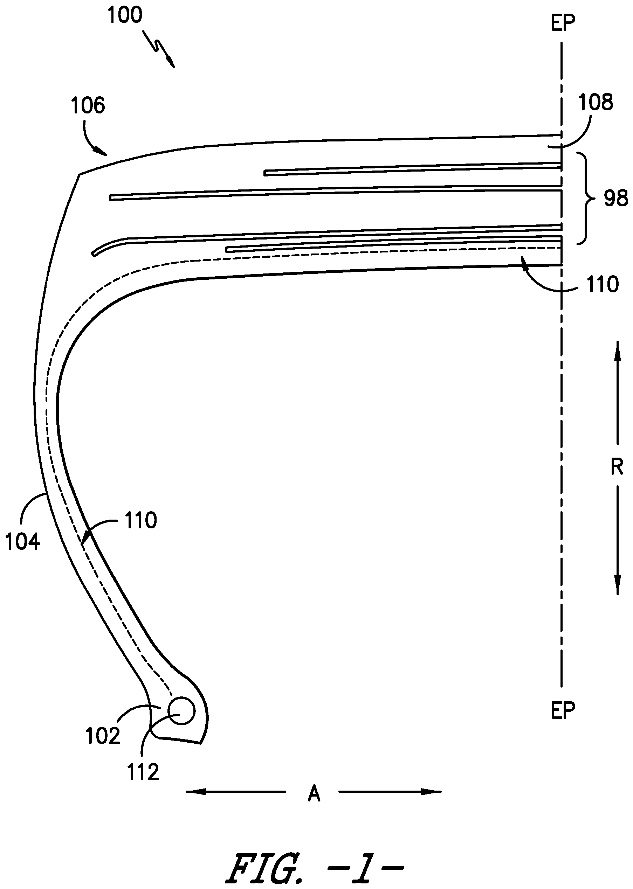

FIG. 1 is a schematic illustration of a tire 100 of the present invention. Tire 100 is shown in a cross-section taken along a meridian plane of the tire. The meridian plane includes the axis of rotation, which is parallel to axial direction A and about which tire 100 rotates during use. Tire 100 is symmetrical about the equatorial plane EP and, therefore, bisects tire 100 into opposing halves of substantially the same construction, for which FIG. 1 depicts only one of the opposing halves. Tire 100 is used by way of example only. One or ordinary skill in the art, using the teachings disclosed herein, will readily understand that the present invention is not limited to any particular construction for tire 100 and a variety of other tire shapes and constructions may also be used.

Tire 100 includes a pair of opposing bead portions 102 and a pair of opposing sidewall portions 104 where only one of each pair is shown in FIG. 1 as will be readily understood by one of ordinary skill in the art. Tire 100 also includes a crown portion 106 connected to each opposing sidewall portion 104 and extending therebetween. A tread layer 108 forms the radially outermost portion of crown portion 106. A body ply 110 extends from each bead portion 102, through each sidewall portion 104, and through the crown portion 106. Body ply 110 is anchored in bead portion 102 and may wrap around bead cores 112, which are positioned in an opposing manner in each bead portion 102. Tire 100 may include one or more belts 98 in various configurations and locations within crown 108.

Bead cores 112 are formed as rings or hoops that extend circumferentially around the axis of rotation of tire 100. As previously explained, bead cores 112 help anchor body ply 110 and maintain tire 100 onto a rim or wheel once mounted. Although shown as circular in Fig. 1, a variety of cross-sectional shapes may be used for each bead core 112.

Conventional constructions for bead cores have used steel wires or cords as previously described. For the present invention, each bead core 112 is constructed from a carbon fiber composite formed in the shape of the ring or hoop having a predetermined radius depending upon the size required for tire 100. Using manufacturing methods such as will be described herein, the strain condition ε of the carbon fiber composite is carefully controlled by curing the carbon fiber composite after it has been formed into the desired ring shape.

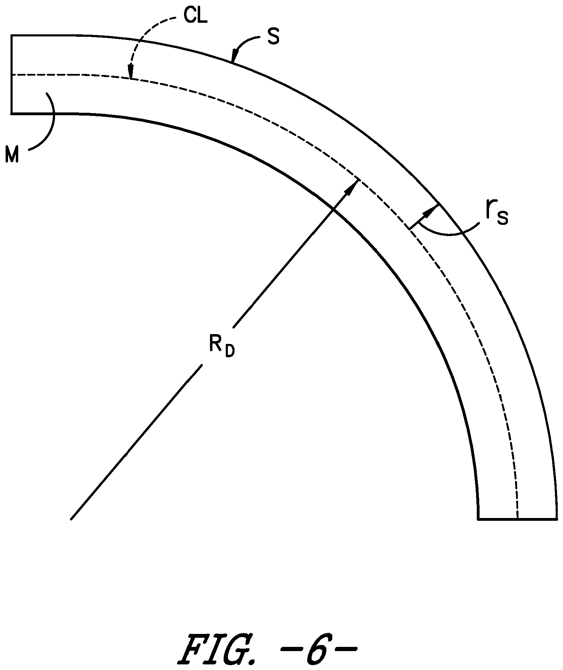

With reference to FIG. 6, equation (1) below provides for a determination of the strain ε in percent at surface S of a material M that has been changed or formed from a linear shape to a curved shape including a ring or coil. Material M has a radius $r_s$ from its centerline CL to surface S. After bending from a linear to a curved condition, material M now has a radius $R_D$ as measured to centerline CL of material M.

$$\text{Eqn: (1)}$$

$$\varepsilon = (r_s / R_D) * 100$$

In general, carbon fiber composites exhibit a very low strain ε at break. For example, a typical range for the strain ε at break would be 0.7 percent to 2.2 percent for a carbon fiber composite. Unfortunately, the composites exhibiting the higher strains at break are very expensive. When a cured carbon fiber composite is formed into the desired ring or coil shape for a bead core of a tire such as bead core 112, the material's change from a linear to a curved shape consumes a portion of the available strain. For example, a strain as high as 0.2 percent could be created within the carbon fiber composite by forming it into the desired ring or coil shape for bead core 112. If such carbon fiber composite has a strain ε at break of e.g., 0.7 percent, then ~ 29 percent of the strain available is consumed by the manufacturing process. This leaves very little strain available before break during operation of the tire - an undesirable result. However, by curing the carbon fiber composite after the desired ring shape for bead core 112 has been formed, the present invention allows for maximizing the amount of strain available for bead core 112's use in e.g., tire 100.

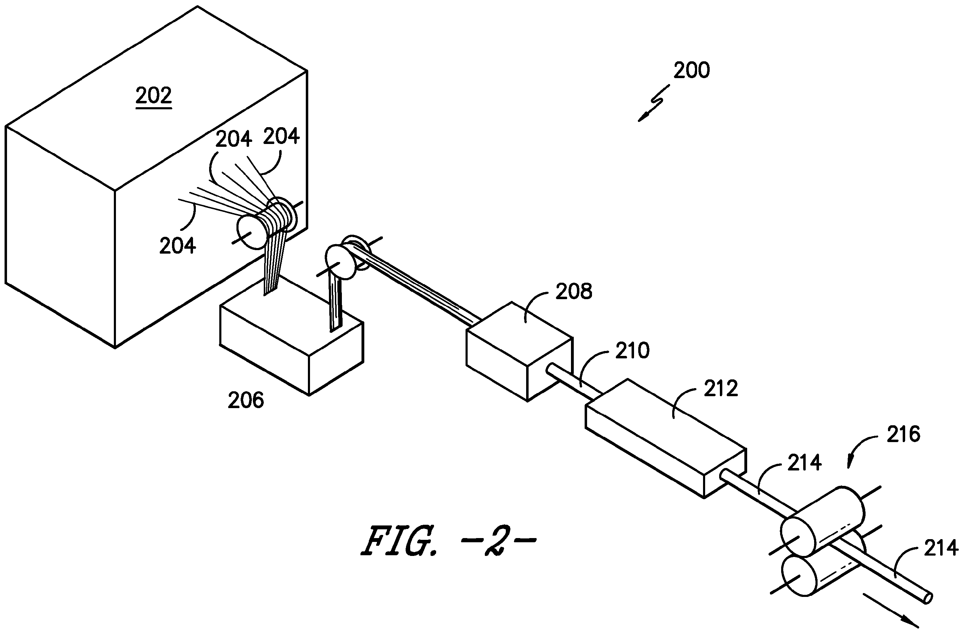

FIG. 2 provides a schematic illustration of an exemplary embodiment of a pultrusion process 200 as may be used to manufacture carbon fiber composites of the present invention. As shown, process 200 include a supply 202 of continuous carbon fibers, which can be provided as e.g., rovings 204 from a plurality of bobbins or other feeds (not shown). Multiple feeds of rovings 204 can be used depending on e.g., the strength and size of the composite desired.

Rovings 204 are then passed through a resin bath 206 where they are coated with a resin. Alternatively, rovings 204 of carbon fibers may be impregnated with the resin in a pressure chamber or other impregnation device. A variety of resins may be used such as e.g., one or more epoxy resins, vinyl ester resins, and unsaturated polyester resins. The resin may be a thermoset resin. Other resin types may be used as well.

After application of the resin, rovings 204 with the applied resin are passed through a pre-forming die 208 having a cross section of a first predetermined area and shape to provide a first precursor 210 with a predetermined shape. First precursor 210 can then be passed through a forming die 212 also having a cross-section of a second predetermined size and shape so to provide a second precursor 214, which is an elongate carbon fiber composite. Rollers 216 or other mechanisms may be used to pull precursor 214 through forming die 212.

Importantly, the resin in second precursor 214 is totally uncured. Alternatively, if resin is partially cured at this point, the level of curing is minimized so as not to introduce any strain into the carbon fiber composite when it is formed into a ring or coil and then cured for bead core 112 or an intermediate that will cured and then further formed for use as bead core 112 as will now be described.

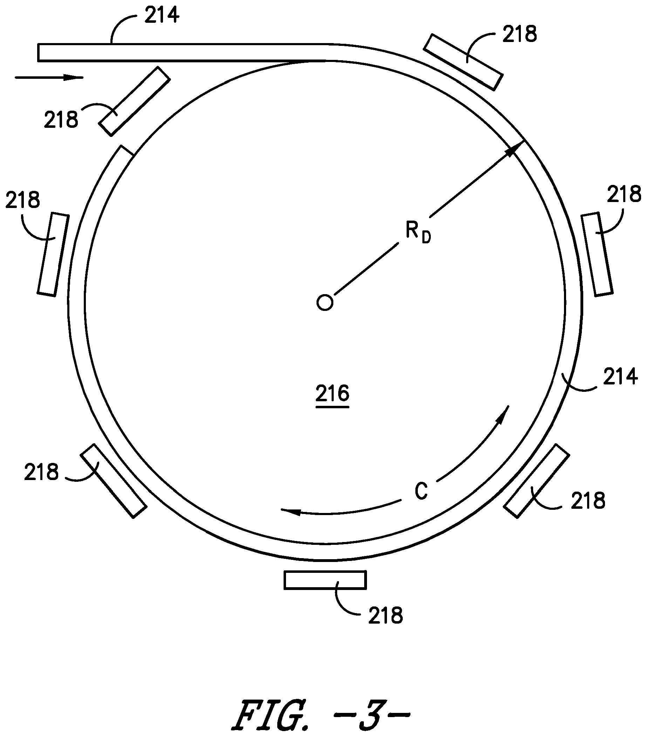

FIG. 3 provides an exemplary embodiment where second precursor 214 is wrapped onto a wheel or roller 216. For example, roller 216 may provide second precursor 214 with a radius $R_D$, which is selected based upon e.g., the radius desired for the ring forming bead core 112 or an intermediate that will be further formed into bead core 112.

Second precursor 214 is wrapped around roller 216 the number of times desired for forming bead core 112 or an intermediate. For example, second precursor 214 may be wrapped around roller 216 multiple times such as 2, 3, 4, 8 times or more. For this exemplary embodiment, second precursor 214 is wrapped over itself to form a precursor to bead core 112.

Once the desired number of wraps or loops around roller 216 have been completed, the resin of second precursor 214 is cured using e.g., heat, radiation, or other energy sources 218 positioned about roller 216. After curing, the now formed bead core 112 (formed from multiple cured loops of second precursor 214) can be removed. Because precursor 214 was cured after being formed into a ring on roller 216, the strain in the resulting bead core 112 from the carbon fiber composite precursor 214 will be minimal or have a strain $\varepsilon \leq 0.1$ percent.

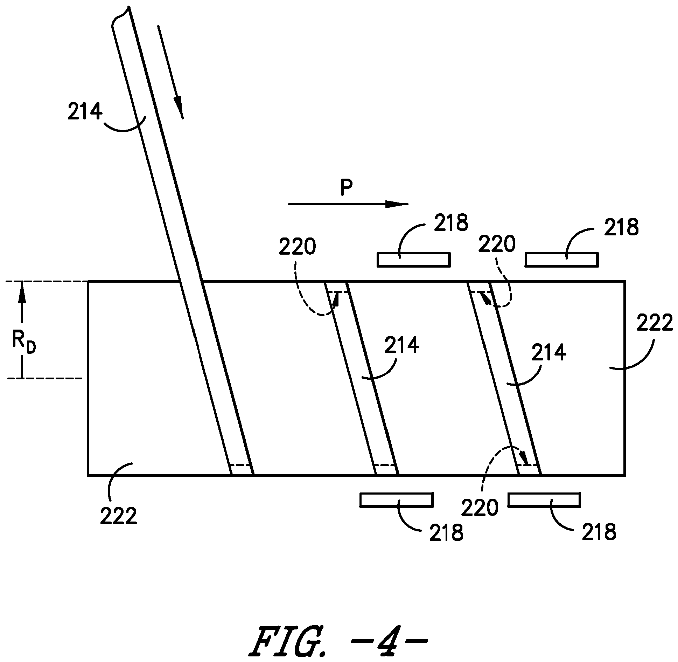

FIG. 4 provides another exemplary embodiment where second precursor 214 is wrapped in a spiral manner about a cylindrical roller 222 as it is advanced along a process direction P. Cylindrical roller 222 includes grooves 220 into which second precursor 214 is received and provide a radius $R_D$ depending upon the radius desired for the ring forming bead core 112 or an intermediate further formed into bead core 112 after curing. As second precursor 214 is wrapped and advanced along process direction P, it is cured using e.g., heat, radiation, or other energy sources 218 positioned about roller 222. After curing, the now formed bead core 112 (formed from multiple cured loops of second precursor 214 can be removed from roller 220. Again, because precursor 214 was cured after being formed into a ring on roller 222, the strain in the resulting bead core 112 from the carbon fiber composite precursor 214 will be minimal or have a strain $\varepsilon \leq 0.1$ percent.

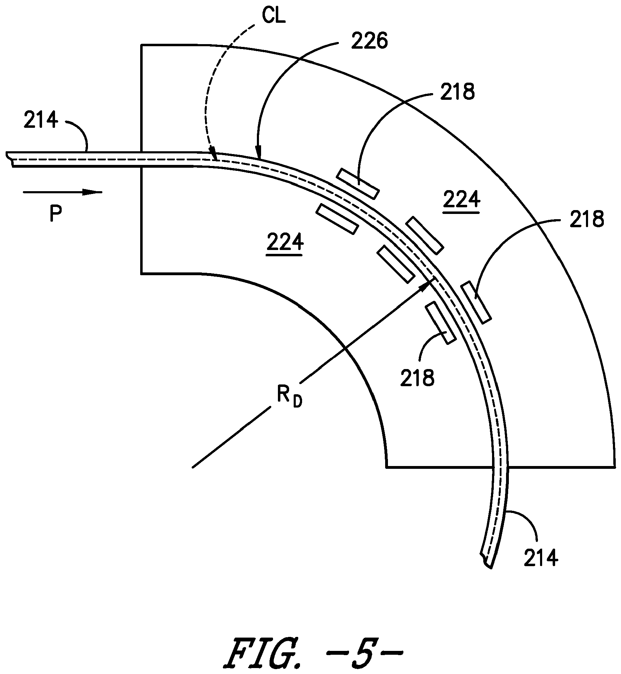

Another exemplary embodiment is depicted in FIG. 5, which includes a forming die 224 through which second precursor 214 is moved along process direction P. As second precursor 214 moves through die 224 it is formed into a ring or coil having radius $R_D$ depending upon the radius desired for the ring forming bead core 112 or an intermediate that will be used to make it after curing. As second precursor 214 is advanced through die 224, it is cured using e.g., heat, radiation, or other energy sources 218 positioned along the channel 226 in die 224. A coil of multiple loops or rings can be used to create bead core 112 as previously indicated. As with previous embodiments, because precursor 214 was cured after being formed into a ring or coil using die 224, the strain in the resulting bead core 112 from the carbon fiber composite precursor 214 will be minimal or have a strain $\varepsilon \leq 0.1$ percent.

In another embodiment of the invention, precursor 214 may be converted to an intermediate coil or ring that is cured and then e.g., stored. After curing, the cured intermediate may then be provided with additional curvature to form the ring or coil of the shape desired for bead core 112.

For example, precursor 214 may be provided with a curvature having an intermediate radius and then further bent to a different radius having the curvature desired for bead core 112. Rather than attempting to form precursor 214 into a ring having the radius needed for each tire size desired, it may be more desirable that precursor 214 is first formed into an intermediate ring or coil having a predetermined but intermediate radius, cured, and then provided with additional curvature depending upon the particular tire size needed.

By way of example, assume precursor 214 is formed into an intermediate ring or coil that has a radius $r_s$ of 1.3 mm using roller 222 and has a radius $R_{DI}$ of 570 mm after curing. Suppose precursor 214 is now further formed into a ring or coil forming bead core 112 with a radius $R_{D2}$ of 700 mm. In such case, the strain $\varepsilon$ in the resulting carbon fiber composite of bead core 112 would be 0,1 percent or less as shown by the following calculation: (1,3 / 570) - (1.3 / 700) = 0.228 percent - 0.186 percent = 0.042 percent.

In such case, if the strain at break of the carbon fiber composite is as low as 0.7 percent, the formation of bead core 112 by bending the composite has used only 6 percent of the strain available before break. As such, the present invention is very advantageous for the use of carbon fiber composites in the formation of bead core 112.

After forming bead core 112, the shape could be set by several metallic clips, a coating like a glue could be applied to increase the adhesion of the composite and rubber, and/or it may be further sheathed in one or more rubber materials to create bead portion 102 or to create an precursor to bead portion 102. A variety of different rubber materials may be used.

As stated, different carbon fiber composites may be used with the present invention created by processes such as described in FIG. 2 or others as well. In one exemplary embodiment, the carbon fiber composite used to create bead core 112 has a strain at break of 2.2 percent or less. In other exemplary embodiment, the carbon fiber composite used to create bead core 112 has a strain in the range of 0.6 percent to 1.8 percent. As used herein, the strain at break is measured according to ASTM D3916 Standard Test Method for Tensile Properties of Pultruded Glass-Fiber-Reinforced Plastic Rod.

In certain embodiments, the carbon fiber composite used for bead core 112 has a tensile modulus in the range of 100 GPa to 400 GPa. In still another embodiment, used for bead core 112 has a tensile modulus in the range of 100 GPa to 300 GPa. As used herein, the tensile modulus is measured according to ASTM D3916.

## Claims

1. A tire, comprising:

   a pair of opposing bead portions (102);
   a pair of opposing sidewall portions (104), each sidewall portion connected with a bead portion;
   a crown portion (106) connected between opposing sidewall portions;
   a pair of bead core (112) positioned within each bead portion, each bead core comprising a carbon fiber composite **characterized by** having a centerline (CL) and a radius $r_s$ from the centerline (CL) and extending circumferentially around an axis of rotation of the tire with a radius $R_D$, wherein the carbon fiber composite is under a strain $\varepsilon$ of 0.1 percent or less, where strain $\varepsilon$ is determined according to

   $$\varepsilon = ( r_s / R_D ) * 100.$$

2. The tire of claim 1, wherein the carbon fiber composite is cured after being formed into the shape of a ring or coil.

3. The tire of claim 1, wherein the carbon fiber composite is formed by pultrusion.

4. The tire of claim 1, wherein the carbon fiber composite comprises a plurality of strands wrapped into the shaped of a ring or coil.

5. The tire of claim 1, wherein the carbon fiber composite comprises carbon fibers embedded in a resin.

6. The tire of claim 5, wherein the carbon fibers are impregnated with the resin.

7. The tire of claim 5 or claim 6, wherein the resin is a thermoset resin.

8. The tire of claim 5 or claim 6, wherein the resin is one or more of an epoxy resin, vinyl ester resin, and unsaturated polyester resins.

9. The tire of claim 1, wherein the carbon fiber composite has a strain at break of 2.2 percent or less, measured according to ASTM D3916 Standard Test Method for Tensile Properties of Pultruded Glass-Fiber-Reinforced Plastic Rod.

10. The tire of claim 1, wherein the carbon fiber composite has a strain at break in the range of 0.6 percent to 1.8 percent, measured according to ASTM D3916 Standard Test Method for Tensile Properties of Pultruded Glass-Fiber-Reinforced Plastic Rod.

11. The tire of claim 1, wherein the carbon fiber composite of each bead core is contained within a sheath of one or more rubber materials forming one of the bead portions.

12. The tire of claim 1, wherein the carbon fiber composite has a tensile modulus in the range of 100 GPa to 400 GPa, measured according to ASTM D3916.

13. The tire of claim 1, wherein the carbon fiber composite has a tensile modulus in the range of 100 GPa to 300 GPa, measured according to ASTM D3916.

14. The tire of claim 1, wherein each bead comprises a carbon fiber composite wrapped multiple times into the shape of a ring.

15. The tire in claim 1, wherein each bead comprises a carbon fiber composite wrapped at least 3 times into the shape of a ring.

## Patentansprüche

1. Reifen, umfassend:

   ein Paar von gegenüberliegenden Wulstabschnitten (102) ;
   ein Paar von gegenüberliegenden Seitenwandabschnitten (104), wobei jeder Seitenwandabschnitt mit einem Wulstabschnitt verbunden ist;
   einen Kronenabschnitt (106), der zwischen gegenüberliegenden Seitenwandabschnitten befestigt ist;
   ein Paar von Wulstkernen (112), die innerhalb jedes Wulstabschnitts positioniert sind, wobei jeder Wulstkern einen Kohlefaserverbundstoff umfasst, **dadurch gekennzeichnet, dass** er eine Mittellinie (CL) und einen

Radius $r_s$ von der Mittellinie (CL) aufweist und sich in Umfangsrichtung um eine Drehachse des Reifens mit einem Radius $R_D$ erstreckt, wobei der Kohlefaserverbundstoff eine Dehnung $\varepsilon$ von 0,1 Prozent oder weniger aufweist, wobei die Dehnung $\varepsilon$ bestimmt wird gemäß

$$\varepsilon = (r_s/R_D) * 100.$$

2. Reifen nach Anspruch 1, wobei der Kohlefaserverbundwerkstoff ausgehärtet wird, nachdem er in die Form eines Rings oder einer Spule gebracht wurde.

3. Reifen nach Anspruch 1, wobei der Kohlefaserverbundwerkstoff durch Pultrusion gebildet wird.

4. Reifen nach Anspruch 1, wobei der Kohlenstofffaserverbundstoff eine Vielzahl von Strängen umfasst, die in Form eines Rings oder einer Spule gewickelt sind.

5. Reifen nach Anspruch 1, wobei der Kohlefaserverbundstoff in ein Harz eingebettete Kohlefasern umfasst.

6. Reifen nach Anspruch 5, bei dem die Kohlenstofffasern mit dem Harz imprägniert sind.

7. Reifen nach Anspruch 5 oder 6, wobei das Harz ein duroplastisches Harz ist.

8. Reifen nach Anspruch 5 oder 6, wobei das Harz eines oder mehrere aus einem Epoxidharz, Vinylesterharz und ungesättigten Polyesterharzen ist.

9. Reifen nach Anspruch 1, wobei der Kohlefaserverbundwerkstoff eine Bruchdehnung von 2,2 Prozent oder weniger aufweist, gemessen nach ASTM D3916 Standard Test Method for Tensile Properties of Pultruded Glass-Fiber-Reinforced Plastic Rod.

10. Reifen nach Anspruch 1, wobei der Kohlefaserverbundwerkstoff eine Bruchdehnung im Bereich von 0,6 Prozent bis 1,8 Prozent aufweist, gemessen nach ASTM D3916 Standard Test Method for Tensile Properties of Pultruded Glass-Fiber-Reinforced Plastic Rod.

11. Reifen nach Anspruch 1, bei dem der Kohlefaserverbundwerkstoff jedes Wulstkerns in einem Mantel aus einem oder mehreren Gummimaterialien enthalten ist, der einen der Wulstbereiche bildet.

12. Reifen nach Anspruch 1, wobei der Kohlefaserverbundwerkstoff einen Zugmodul im Bereich von 100 GPa bis 400 GPa, gemessen nach ASTM D3916, aufweist.

13. Reifen nach Anspruch 1, wobei der Kohlefaserverbundwerkstoff einen Zugmodul im Bereich von 100 GPa bis 300 GPa, gemessen nach ASTM D3916, aufweist.

14. Reifen nach Anspruch 1, wobei jeder Wulst einen mehrfach in Ringform gewickelten Kohlefaserverbundwerkstoff umfasst.

15. Reifen nach Anspruch 1, wobei jeder Wulst einen mindestens dreifach ringförmig gewickelten Kohlefaserverbundwerkstoff umfasst.

**Revendications**

1. Pneu, comprenant :

une paire de portions de talon (102) opposées ;
une paire de portions de flanc (104) opposées, chaque portion de flanc étant reliée à une portion de talon ;
une portion de sommet (106) reliée entre des portions de flanc opposées ;
une paire de tringles de talon (112) positionnée à l'intérieur de chaque portion de talon, chaque tringle de talon comprenant un composite en fibres de carbone,
**caractérisé en ce qu'**il a une ligne médiane (CL) et un rayon $r_s$ depuis la ligne médiane (CL) et s'étendant circonférentiellement autour d'un axe de rotation du pneu avec un rayon $R_D$, dans lequel le composite en fibres de carbone est soumis à une contrainte $\varepsilon$ de 0,1 pour cent ou moins, où la contrainte $\varepsilon$ est déterminée selon :

$$\varepsilon = (r_s/R_D) * 100.$$

2. Pneu selon la revendication 1, dans lequel le composite en fibres de carbone est durci après avoir été formé dans la forme d'un anneau ou d'une bobine.

3. Pneu selon la revendication 1, dans lequel le composite en fibres de carbone est formé par pultrusion.

4. Pneu selon la revendication 1, dans lequel le composite en fibres de carbone comprend une pluralité de brins enroulés dans la forme d'un anneau ou d'une bobine.

5. Pneu selon la revendication 1, dans lequel le composite en fibres de carbone comprend des fibres de carbone incorporées dans une résine.

6. Pneu selon la revendication 5, dans lequel les fibres de carbone sont imprégnées de la résine.

7. Pneu selon la revendication 5 ou 6, dans lequel la résine est une résine thermodurcissable.

8. Pneu selon la revendication 5 ou 6, dans lequel la résine est une ou plusieurs parmi une résine époxy, une résine vinylester, et des résines polyester insaturées.

9. Pneu selon la revendication 1, dans lequel le composite en fibres de carbone a une contrainte à la rupture de 2,2 pour cent ou moins, mesurée selon ASTM D3916 Standard Test Method for Tensile Properties of Pultruded Glass-Fiber-Reinforced Plastic Rod.

10. Pneu selon la revendication 1, dans lequel le composite en fibres de carbone a une contrainte à la rupture dans la plage de 0,6 pour cent à 1,8 pour cent, mesurée selon ASTM D3916 Standard Test Method for Tensile Properties of Pultruded Glass-Fiber-Reinforced Plastic Rod.

11. Pneu selon la revendication 1, dans lequel le composite en fibres de carbone de chaque tringle de talon est contenu à l'intérieur d'une gaine d'un ou plusieurs matériaux en caoutchouc formant l'une des portions de talon.

12. Pneu selon la revendication 1, dans lequel le composite en fibres de carbone a un module de traction dans la plage de 100 GPa à 400 GPa, mesuré selon ASTM D3916.

13. Pneu selon la revendication 1, dans lequel le composite en fibres de carbone a un module de traction dans la plage de 100 GPa à 300 GPa, mesuré selon ASTM D3916.

14. Pneu selon la revendication 1, dans lequel chaque talon comprend un composite en fibres de carbone enroulé plusieurs fois dans la forme d'un anneau.

15. Pneu selon la revendication 1, dans lequel chaque talon comprend un composite en fibres de carbone enroulé au moins 3 fois dans la forme d'un anneau.

FIG. -1-

**FIG. -2-**

FIG. −3−

FIG. -4-

**FIG. -5-**

FIG. -6-

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006128494 A1